# EUROPÄISCHE PATENTSCHRIFT

(11) **EP 4 042 546 B1**
(45) Veröffentlichungstag und Bekanntmachung des Hinweises auf die Patenterteilung: **13.05.2026**
(21) Anmeldenummer: 20754747.2
(22) Anmeldetag: 11.08.2020
(51) Int. Cl.: H02K 5/20, H02K 9/197

(54) **ELEKTRISCHE MASCHINE MIT BYPASS-KÜHLKANAL**
ELECTRICAL MACHINE WITH BYPASS COOLING DUCT
MACHINE ÉLECTRIQUE AVEC CONDUIT DE REFROIDISSEMENT DE DÉRIVATION

(30) Priorität: 10.10.2019 DE 102019215582; 13.05.2020 DE 102020206000
(43) Veröffentlichungstag der Anmeldung: 17.08.2022
(73) Patentinhaber: Robert Bosch GmbH, 70442 Stuttgart (DE)
(72) Erfinder: BENSING, Felix, 70437 Stuttgart (DE); MUELLER, Florian, 96129 Strullendorf (DE); HEITZER, Simon Michael, 83059 Kolbermoor (DE); ENDER, Stefan, 70435 Stuttgart (DE)
(86) Internationale Anmeldenummer: PCT/EP2020/072528
(87) Internationale Veröffentlichungsnummer: WO 2021/069132

(56) Entgegenhaltungen:
- EP-A2- 1 096 647
- DE-A1- 102007 035 271
- DE-A1- 102010 041 305
- DE-A1- 102016 225 342
- DE-A1- 102016 225 521
- US-A1- 2015 308 456

## Beschreibung

### Stand der Technik

Die vorliegende Erfindung betrifft eine elektrische Maschine. Die elektrische Maschine weist einen Kühlpfad durch ihr Gehäuse auf, wobei ein Bypass-Kanal zu besagtem Kühlpfad vorgesehen ist.

Aus dem Stand der Technik sind elektrische Maschinen bekannt. Mit zunehmender Leistung der elektrischen Maschine ist eine Kühlung vorzusehen. Dazu wird üblicherweise ein mäanderförmiger Kühlmittelpfad durch das Gehäuse der elektrischen Maschine ausgebildet. Beispielsweise zeigt die DE 10 2012 215 018 A1 eine solche Maschine.

Aus der DE 10 2016 225 521 A1 ist eine elektrische Maschine bekannt, die ein Gehäuse aufweist, in dem ein mäanderförmiger Kühlpfad ausgebildet ist und das einen Bypasskanal aufweist, der unter Umgehung eines Teils des mäanderförmigen Kühlpfads zwei Teilbereiche des mäanderförmigen Kühlpfads fluidverbindet.

### Offenbarung der Erfindung

Durch die erfindungsgemäße elektrische Maschine ist erreicht, dass die Parameter Wärmeübergang und Druckverlust flexibel eingestellt werden können. Somit kann trotz der Verwendung eines axial mittig orientierten Profilteils, dem Kühlmantel, eine Einflussmöglichkeit auf das Wärmeübertragungsverhalten und den Druckabfall der Kühlung gegenüber dem Stand der Technik erhöht werden.

Die erfindungsgemäße elektrische Maschine weist ein Gehäuse auf. Das Gehäuse wiederum umfasst einen hohlzylinderförmigen Kühlmantel sowie stirnseitig an dem Kühlmantel angebrachte Gehäuseabschlüsse. Bei den Gehäuseabschlüssen handelt es sich insbesondere um Lagerschilde. Der Kühlmantel dient zur Aufnahme eines Stators der elektrischen Maschine. Somit lässt sich der Stator der elektrischen Maschine durch den Kühlmantel kühlen. Der Kühlmantel weist Kühlkanäle auf, die sich zwischen seinen Stirnseiten erstrecken. Die Gehäuseabschlüsse wiederum weisen Umlenknuten auf. Die Umlenknuten und die Kühlkanäle sind derart miteinander fluidverbunden, dass zwei benachbarte Kühlkanäle mit einer Umlenknut fluidverbunden sind. Auf diese Weise bilden die Kühlkanäle und die Umlenknuten einen durchgängigen Kühlpfad. Der Kühlpfad erstreckt sich zwischen einem Einlass und einem Auslass durch das Gehäuse. Es ist vorgesehen, dass sich der Kühlpfad mäanderförmig durch besagtes Gehäuse erstreckt. Entlang des Kühlpfades kann ein Kühlmittel strömen und somit das Gehäuse und insbesondere den Stator der elektrischen Maschine kühlen.

Erfindungsgemäß ist vorgesehen, dass das Gehäuse einen Bypass-Kanal aufweist. Durch den Bypass-Kanal sind Einlass und Auslass unter Umgehung des mäanderförmigen Kühlpfads fluidverbunden. Somit kann ein Teil des in den Einlass gegebenen Kühlmittels durch den Bypass-Kanal direkt zu dem Auslass gelangen. Damit lassen sich insbesondere Parameter wie der Druckabfall zwischen Einlass und Auslass verringern. Nicht-erfindungsgemäß kann der Bypass-Kanal auch zwei Teilbereiche des mäanderförmigen Kühlpfads fluidverbinden, wobei in diesem Fall lediglich ein Teil des mäanderförmigen Kühlpfads umgangen wird. Die grundsätzliche Wirkung des Bypass-Kanals bleibt dieselbe wie zuvor beschrieben. Insbesondere lassen sich Parameter wie der Druckabfall zwischen Einlass und Auslass einstellen.

Die Unteransprüche haben bevorzugte Weiterbildungen der Erfindung zum Inhalt.

Bevorzugt ist vorgesehen, dass das Gehäuse zwischen Kühlmantel und Gehäuseabschluss jeweils eine Dichtung aufweist. Die Dichtung weist zum Querschnitt der Kühlkanäle korrespondierende Ausschnitte auf, sodass das Kühlmittel von dem Kühlkanal durch den Ausschnitt zu der Umlenknut gelangen kann. Ebenso kann das Kühlmittel von der Umlenknut zu dem Kühlkanal durch den Ausschnitt gelangen. Da einer der Kühlkanäle mit dem Einlass verbunden ist und einer der Kühlkanäle mit dem Auslass, sind somit entsprechende Ausschnitte in der Dichtung 11 vorhanden. Es ist ein Verbindungskanal zwischen den beiden Ausschnitten vorgesehen, die dem mit dem Einlass verbundenen Kühlkanal und mit dem Auslass verbundenen Kühlkanal zugeordnet sind. Auf diese Weise ist der Bypass-Kanal in der Dichtung realisiert. Wiederum kann das Kühlmittel von dem Einlass durch die Dichtung zu dem Auslass gelangen, wobei der mäanderförmige Kühlpfad durch das Gehäuse umgangen ist.

In einer erfindungsgemäßen Ausgestaltung ist der Bypass-Kanal durch eine Verbindungsnut in den Kühlmantel und/oder den Gehäuseabschluss realisiert. Somit kann durch einfache und kostengünstige Herstellung der Bypass-Kanal realisiert werden. Insbesondere ist lediglich eine Nut, beispielsweise durch einen Fräsvorgang, in den Kühlmantel und/oder den Gehäuseabschluss einzubringen.

Besonders vorteilhaft weist einer der Gehäuseabschlüsse sowohl den Einlass als auch den Auslass auf. Dabei ist vorgesehen, dass der Einlass mit einer Einlassnut und der Auslass mit einer Auslassnut des entsprechenden Gehäuseabschlusses fluidverbunden ist. Die Einlassnut und die Auslassnut sind jeweils mit einem einzelnen Kühlkanal des Kühlmantels fluidverbunden. Die Verbindungsnut verbindet in diesem Fall die Einlassnut und die Auslassnut, sodass eine Fluidkommunikation zwischen Einlassnut und Auslassnut und damit zwischen Einlass und Auslass besteht. Dadurch ist der Bypass-Kanal auf einfache und kostengünstige Art und Weise realisiert. Wiederum kann die Verbindungsnut einfach und aufwandsarm hergestellt werden, beispielsweise durch einen Fräsvorgang. Es ist besonders bevorzugt vorgesehen, dass die Umlenknuten, die Verbindungsnut, die Einlassnut und die Auslassnut allesamt entlang derselben Kreisbahn angeordnet sind. Somit ist eine einfache und kostengünstige Herstellung und Montage gewährleistet. Auch wird keine negative Beeinträchtigung der Strömung durch die Verbindungsnut erreicht.

Die radiale Erstreckung der Einlassnut, der Auslassnut und der Verbindungsnut sind bevorzugt identisch. Somit ist wiederum eine Fertigung vereinfacht. Die kombinierte Erstreckung von Einlassnut, Auslassnut und Verbindungsnut in Umfangsrichtung ist bevorzugt identisch zu der entsprechenden Erstreckung jeder der Umlenknuten entlang der Umfangsrichtung. Somit ist ein homogener Aufbau des Gehäuseabschlusses erreicht.

Bevorzugt beträgt ein Verhältnis von Höhe zu Breite des Bypass-Kanals zwischen 1,0 und 4,0. Besonders bevorzugt beträgt besagtes Verhältnis zwischen 1,2 und 3,5. Durch ein derartiges Verhältnis ist erreicht, dass ein Druckverlust über den gesamten Kühlpfad zwischen Einlass und Auslass optimiert ist.

Der Bypass-Kanal beginnt vorteilhafterweise stromaufwärts des ersten von dem Kühlmittel zu durchlaufenden Kühlkanal und endet stromabwärts des letzten von dem Kühlmittel zu durchlaufenden Kühlkanal. Auf diese Weise ist erreicht, dass die zuvor beschriebene Umgehung des mäanderförmigen Kühlpfads optimal erreicht ist. Der Bypass-Kanal kann dazu insbesondere, wie zuvor beschrieben, in der Dichtung und/oder in dem Gehäuseabschluss und/oder in dem Kühlmantel vorgesehen sein.

Das Kühlmittel ist besonders bevorzugt Wasser oder ist wasserbasiert ausgeführt. Somit ist das Kühlmittel einfach und kostengünstig herstellbar, nicht oder nur im geringen Umfang umweltschädlich und ermöglicht eine zuverlässige Kühlung des Gehäuses der elektrischen Maschine und damit insbesondere des Stators der elektrischen Maschine.

Bei den Gehäuseabschlüssen handelt es sich, wie zuvor bereits beschrieben, bevorzugt um Lagerschilder. Diese dienen zum rotierbaren Lagern eines Rotors der elektrischen Maschine. Insbesondere sind Wälzlager vorgesehen, an denen der Rotor rotierbar an den Gehäuseabschlüssen gelagert ist.

### Kurze Beschreibung der Zeichnung

Nachfolgend werden Ausführungsbeispiele der Erfindung unter Bezugnahme auf die begleitende Zeichnung im Detail beschrieben. In der Zeichnung ist:
- Figur 1: eine schematische Schnittansicht einer elektrischen Maschine gemäß einem Ausführungsbeispiel der Erfindung,
- Figur 2: eine schematische räumliche Repräsentation der elektrischen Maschine gemäß dem Ausführungsbeispiel der Erfindung,
- Figur 3: eine schematische Seitenansicht der elektrischen Maschine gemäß dem Ausführungsbeispiel der Erfindung,
- Figur 4: eine schematische Ansicht eines Gehäuseabschlusses der elektrischen Maschine gemäß dem Ausführungsbeispiel der Erfindung,
- Figur 5: eine schematische Detailansicht des Gehäuseabschlusses der elektrischen Maschine gemäß dem Ausführungsbeispiel der Erfindung, und
- Figur 6: eine schematische Explosionsdarstellung des Gehäuses der elektrischen Maschine gemäß dem Ausführungsbeispiel der Erfindung.

### Ausführungsform der Erfindung

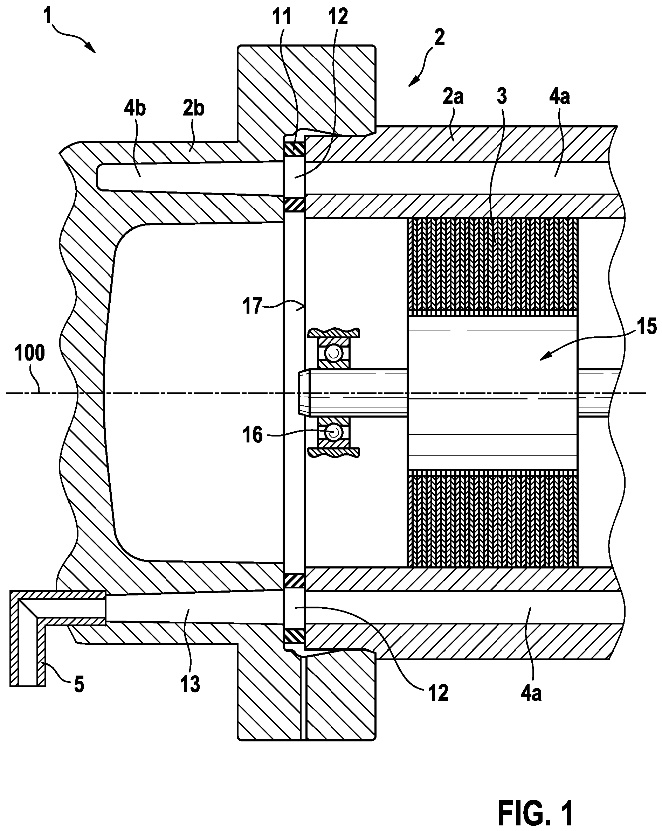

Figur 1 zeigt schematisch eine elektrische Maschine 1 gemäß einem Ausführungsbeispiel der Erfindung. Die elektrische Maschine 1 weist ein Gehäuse 2 auf, wobei sich das Gehäuse in mehrere Komponenten unterteilt. So ist zum einen ein Kühlmantel 2a vorgesehen. Der Kühlmantel 2a dient insbesondere zum Aufnehmen eines Stators 3 der elektrischen Maschine 1. Durch den Stator 3 ist ein Rotor 15 der elektrischen Maschine 1 antreibbar.

Um Abwärme im Betrieb der elektrischen Maschine 1 abführen zu können, ist der Kühlmantel 2a mit einer Vielzahl von Kühlkanälen 4a versehen, die sich zwischen den Stirnseiten 17 des Kühlmantels 2a erstrecken. An jeder der Stirnseiten 17 ist ein Gehäuseabschluss 2b angeordnet, wobei die Gehäuseabschlüsse 2b bevorzugt als Lagerschilde ausgeführt sind. Es ist insbesondere vorgesehen, dass der Rotor 15 über ein Wälzlager 16 an dem jeweiligen Gehäuseabschluss 2b rotierbar gelagert ist, wobei die Anordnung des Wälzlagers 16 in Figur 1 lediglich schematisch dargestellt ist. So kann der Gehäuseabschluss 2b auch als reine Gehäusekappe ausgeführt sein, ohne das Wälzlager 16 aufzunehmen. In diesem Fall ist vorgesehen, dass der Rotor 15 über das Wälzlager 16 am Kühlmantel 2a gelagert ist.

Der Rotor 15 rotiert im Betrieb der elektrischen Maschine 1 um eine Mittelachse 100. Die Mittelachse 100 ist insbesondere auch eine Mittelachse des Stators 3 sowie des Kühlmantels 2a.

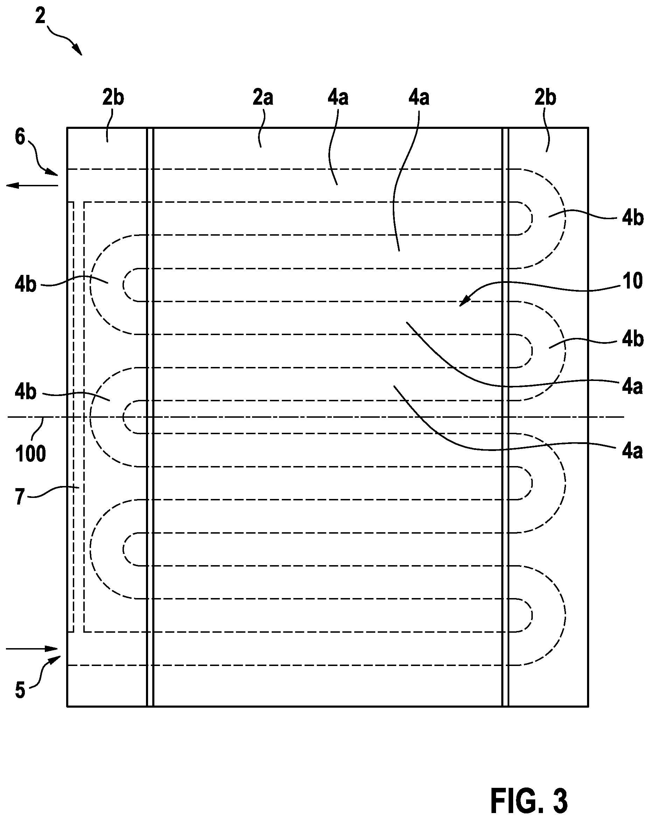

Zwischen dem Gehäuseabschluss 2b und dem Kühlmantel 2a ist eine Dichtung 11 angeordnet. Die Dichtung 11 weist Ausschnitte 12 auf, sodass Fluid von dem Kühlkanal 4a des Kühlmantels 2a zu Umlenknuten 4b des Gehäuseabschlusses 2b und umgekehrt gelangen können. Durch die Umlenknuten 4b sind jeweils zwei benachbarte Kühlkanäle 4a fluidverbunden, was nachfolgend mit Bezug auf Figur 3 genauer erläutert wird.

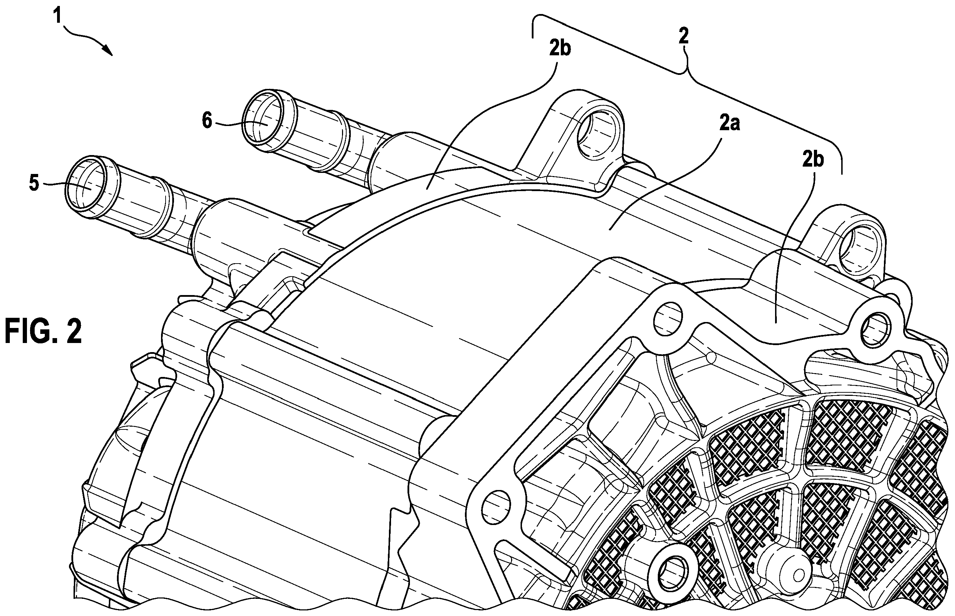

Außerdem ist vorgesehen, dass an dem Gehäuseabschluss 2b ein Einlass 5 und ein Auslass 6 (vgl. Figur 2) angeordnet sind. Wie in Figur 1 dargestellt, ist der Einlass 5 mit einer Einlassnut 13 verbunden. Von der Einlassnut 13 kann das Kühlmittel durch einen passenden Ausschnitt 12 der Dichtung 11 in einen der Kühlkanäle 4a gelangen. Selbiges gilt in umgekehrter Reihenfolge für den Auslass 6, was in Figur 1 aber nicht gezeigt ist.

Figur 2 zeigt schematisch eine räumliche Repräsentation der elektrischen Maschine 1. Insbesondere ist dargestellt, dass das Gehäuse 2 einen Kühlmantel 2a und an den Stirnseiten 17 (vgl. Figur 1) des Kühlmantels 2a angebrachte Gehäuseabschlüsse 2b aufweist. Lediglich einer der Gehäuseabschlüsse 2b weist den Einlass 5 und den Auslass 6 auf.

In Figur 3 ist schematisch dargestellt, wie sich ein Kühlpfad durch das Gehäuse 2 erstreckt. So ist vorgesehen, dass einer der Gehäuseabschlüsse 2b wie bereits in Figur 2 gezeigt sowohl den Einlass 5 als auch den Auslass 6 aufweist. Außerdem weist jeder Gehäuseabschluss 2b eine Vielzahl von Umlenknuten 4b auf. Durch die Umlenknuten 4b sind die Kühlkanäle 4a mäanderförmig verbunden, sodass sich ein durchgängiger Kühlpfad 10 von dem Einlass 5 mäanderförmig zu dem Auslass 6 erstreckt. Dadurch ist sichergestellt, dass das Kühlmittel das Gehäuse 2 zuverlässig durchströmt und Wärme von dem gesamten Stator aufnehmen kann. Dadurch ist eine effektive Kühlung sichergestellt.

Um einen Druckabfall zwischen dem Einlass 5 und dem Auslass 6 zu reduzieren, ist ein Bypass-Kanal 7 in dem entsprechenden Gehäuseabschluss 2b vorgesehen. Somit kann Kühlfluid von dem Einlass 5 über den Bypass-Kanal 7 direkt zu dem Auslass 6 gelangen, ohne dafür jemals in den Kühlmantel 2a eingetreten zu sein. Dadurch ist eine Vermeidung des mäanderförmigen Kühlpfads 10 erreicht. In einer nicht-erfindungsgemäßen Ausgestaltung kann der Bypass-Kanal 7 auch zwei Teilbereiche des mäanderförmigen Kühlpfads verbinden, sodass lediglich ein Teil des mäanderförmigen Kühlpfads umgangen wird.

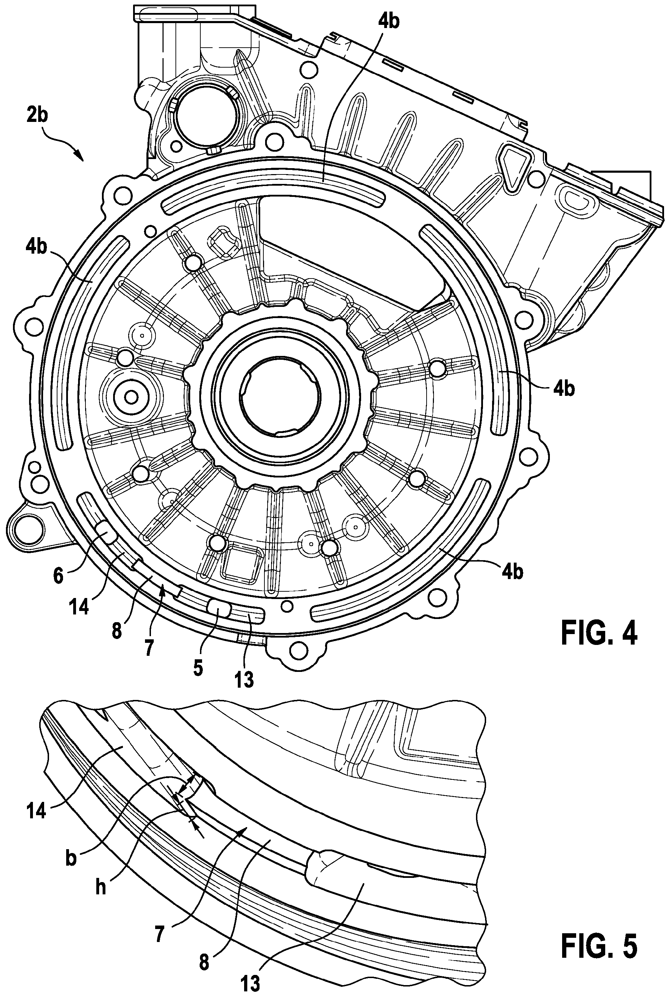

Die Figuren 4 und 5 zeigen schematisch einen Gehäuseabschluss 2b der elektrischen Maschine 1 gemäß dem Ausführungsbeispiel der Erfindung. Besagter Gehäuseabschluss 2b weist eine Vielzahl von Umlenknuten 4b auf, die, wie zuvor bereits beschrieben, jeweils zwei benachbarte Kühlkanäle 4a des Kühlmantels 2a fluidverbinden. Zusätzlich ist eine Einlassnut 13 vorgesehen, die mit dem Einlass 5 fluidverbunden ist. Eine Auslassnut 14 ist mit dem Auslass 6 fluidverbunden. Wie insbesondere in Figur 5 detailliert gezeigt ist, erstreckt sich eine Verbindungsnut 8 zwischen der Einlassnut 13 und der Auslassnut 14, um so den Bypass-Kanal 7 zu bilden. Dabei kann die Verbindungsnut 8 einfach und kostengünstig hergestellt werden, beispielsweise durch Fräsen. Anhand eines Verhältnisses von Höhe h zu Breite b des Bypass-Kanals 7 lässt sich ein Fluidfluss durch den mäanderförmigen Kühlpfad 10 optimiert einstellen. So ergibt sich insbesondere für ein Verhältnis von Höhe h zu Breite b des Bypass-Kanals 7 zwischen 1,0 und 4,0, bevorzugt zwischen 1,2 und 3,5, ein optimierter Druckabfall zwischen Einlass 5 und Auslass 6.

Die Verbindungsnut 8, die Einlassnut 13, die Auslassnut 14 und die Umlenknuten 4b sind bezüglich der Mittelachse 100 allesamt auf derselben Kreisbahn um besagte Mittelachse 100 angeordnet. Außerdem ist vorgesehen, dass eine radiale Erstreckung aller der genannten Nuten, das heißt der Verbindungsnut 8, der Einlassnut 13, der Auslassnut 14 und der Umlenknuten 4b, identisch ist. Somit ist ein einfacher und kostengünstiger, gleichzeitig aber hinsichtlich seiner Kühlleistung optimierter Gehäuseabschluss 2b realisiert.

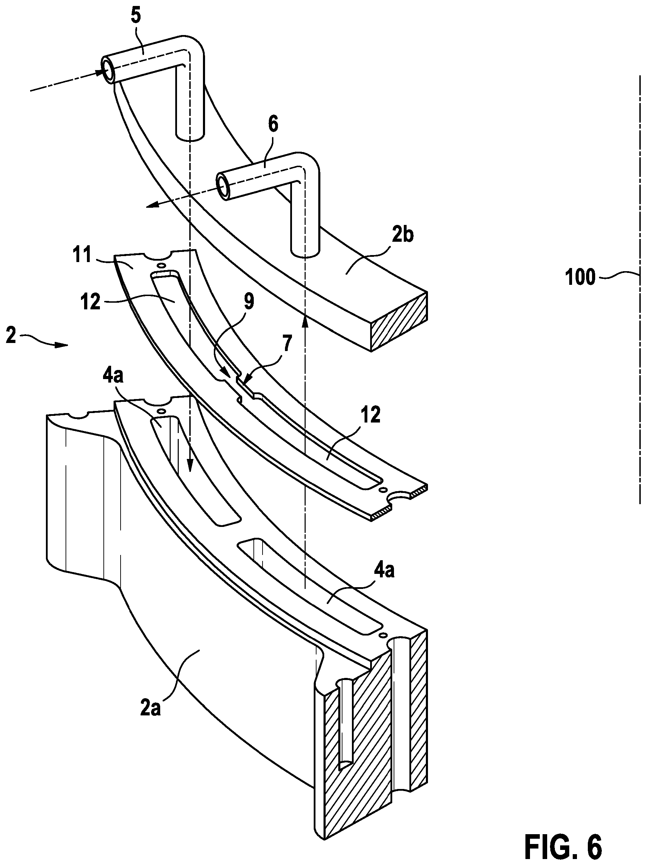

In den Figuren 4 und 5 ist gezeigt, dass die Verbindungsnut 8 in dem Gehäuseabschluss 2b vorgesehen ist. Ebenso kann besagte Verbindungsnut 8 auch in dem Kühlmantel 2a vorgesehen sein. Eine weitere Möglichkeit, den Bypass-Kanal 7 auszubilden, zeigt Figur 6. Figur 6 ist eine schematische Explosionsdarstellung zumindest eines Teils des Gehäuses 2 der elektrischen Maschine 1 gemäß dem Ausführungsbeispiel der Erfindung.

So weist die Dichtung 11, wie zuvor bereits beschrieben, Ausschnitte 12 auf. Die Ausschnitte 12 sind korrespondierend zu einem Querschnitt der Kühlkanäle 4a ausgebildet. Soll der Bypass-Kanal 7 in der Dichtung 11 ausgebildet sein, so ist vorteilhafterweise ein Verbindungskanal 10 zwischen zweier dieser Ausschnitte 12 vorgesehen. So ist einer der Ausschnitte 12 demjenigen Kühlkanal 4a zugeordnet, der mit dem Einlass 5 fluidverbunden ist. Der andere Ausschnitt 12 ist demjenigen Kühlkanal 4a zugeordnet, der mit dem Auslass 6 fluidverbunden ist. Somit ist wiederum eine Möglichkeit für das Kühlmittel geschaffen, den Kühlpfad 10 durch den Verbindungskanal 9 zu umgehen. Das Umgehen des Kühlpfads erfolgt wiederum stromaufwärts des ersten zu durchlaufenden Kühlkanals 4a und stromabwärts des letzten zu durchlaufenden Kühlkanals 4a des Kühlmantels 2a.

In dem in Figur 6 gezeigten Ausführungsbeispiel ist lediglich die Dichtung 11 mit dem Bypass-Kanal 7 zu versehen. Eine Veränderung des Kühlmantels 2a oder des Gehäuseabschlusses 2b sind nicht notwendig. Somit ist eine einfache und kostengünstige Herstellung und Montage gegeben. Besonders vorteilhaft können sich die zuvor beschriebenen Ausführungsbeispiele auch kombinieren lassen, so dass beispielsweise eine Realisierung des Bypass-Kanals 7 sowohl in der Dichtung 11 als auch in dem Gehäuseabschluss 2b vorgesehen ist.

In jedem Fall ist durch die Bypass-Kanäle 7 erreicht, dass ein Druckabfall zwischen Einlass 5 und Auslass 6 verringert ist. Insbesondere lässt sich der Druckabfall anhand einer Dimensionierung des Bypass-Kanals einfach und aufwandsarm auf einen vorgegebenen Wert einstellen.

## Patentansprüche

1. Elektrische Maschine (1) aufweisend ein Gehäuse (2),
- wobei das Gehäuse (2) einen hohlzylinderförmigen Kühlmantel (2a) zur Aufnahme eines Stators (3) aufweist, und
- wobei der Kühlmantel (2a) zwischen seinen Stirnseiten (17) verlaufende Kühlkanäle (4a) aufweist,
- wobei das Gehäuse (2) Umlenknuten (4b) aufweist, so dass zwei benachbarte Kühlkanäle (4a) durch eine Umlenknut (4b) fluidverbunden sind, wodurch die Kühlkanäle (4a) und Umlenknuten (4b) einen durchgängigen, sich zwischen einem Einlass (5) und einem Auslass (6) erstreckenden mäanderförmigen Kühlpfad (10) durch das Gehäuse (2) bilden, durch den ein Kühlmittel strömen kann,
**dadurch gekennzeichnet, dass**
- das Gehäuse (2) stirnseitig an dem Kühlmantel (2a) angebrachte Gehäuseabschlüsse (2b), insbesondere Lagerschilder, aufweist, die die Umlenknuten (4b) umfassen,
- das Gehäuse (2) einen Bypasskanal (7) aufweist, der unter Umgehung des mäanderförmigen Kühlpfads (10) den Einlass (5) und den Auslass (6) fluidverbindet,
- der Bypasskanal (7) durch eine Verbindungsnut (8) in einer stirnseitigen Fügefläche des Kühlmantels (2a) und/oder des Gehäuseabschlusses (2b) oder in einer zwischen dem Kühlmantel (2a) und dem Gehäuseabschluss (2b) angeordneten Dichtung (11) als Verbindung von zwei in der Dichtung (11) ausgebildeten und den Kühlkanälen (4a) zugeordneten Ausschnitten (12) realisiert ist.

2. Elektrische Maschine (1) nach Anspruch 1, **dadurch gekennzeichnet, dass** einer der Gehäuseabschlüsse (2b) den Einlass (5) und den Auslass (6) aufweist,
- wobei der Einlass (5) mit einer Einlassnut (13) und der Auslass mit einer Auslassnut (14) des Gehäuseabschlusses (2b) fluidverbunden ist,
- wobei die Einlassnut (13) und die Auslassnut (14) mit jeweils einem einzelnen Kühlkanal (4a) des Kühlmantels (2a) fluidverbunden sind, und
- wobei die Verbindungsnut (8) die Einlassnut (13) und die Auslassnut (14) fluidverbindet.

3. Elektrische Maschine (1) nach Anspruch 2, **dadurch gekennzeichnet, dass** die Umlenknuten (4b), die Verbindungsnut (8), die Einlassnut (13) und die Auslassnut (14) entlang derselben Kreisbahn angeordnet sind.

4. Elektrische Maschine (1) nach Anspruch 2 oder 3, **dadurch gekennzeichnet, dass** die radiale Erstreckung der Einlassnut (13), der Auslassnut (14) und der Verbindungsnut (8) identisch sind.

5. Elektrische Maschine (1) nach einem der vorhergehenden Ansprüche, **dadurch gekennzeichnet, dass** ein Verhältnis von Höhe (h) zu Breite (b) des Bypasskanals (7) zwischen 1,0 und 4,0, bevorzugt zwischen 1,2 und 3,5, beträgt.

6. Elektrische Maschine (1) nach einem der vorhergehenden Ansprüche, **dadurch gekennzeichnet, dass** der Bypasskanal (7) stromaufwärts des ersten von dem Kühlmittel zu durchlaufenden Kühlkanals (4b) beginnt und stromabwärts des letzten von dem Kühlmittel zu durchlaufenden Kühlkanals (4b) endet.

7. Elektrische Maschine (1) nach einem der vorhergehenden Ansprüche, **dadurch gekennzeichnet, dass** das Kühlmittel Wasser ist oder wasserbasiert ausgeführt ist.

8. Elektrische Maschine (1) nach einem der vorhergehenden Ansprüche, **dadurch gekennzeichnet, dass** ein Rotor (15) an den Gehäuseabschlüssen (4b), insbesondere über jeweils ein Wälzlager (16), rotierbar gelagert ist.

## Claims

1. Electrical machine (1) having a housing (2),
- wherein the housing (2) has a hollow-cylindrical cooling jacket (2a) to accommodate a stator (3), and
- wherein the cooling jacket (2a) has cooling ducts (4a) running between its end sides (17),
- wherein the housing (2) has redirecting grooves (4b) so that two adjacent cooling ducts (4a) are fluidically connected by a redirecting groove (4b), whereby the cooling ducts (4a) and redirecting grooves (4b) form a continuous cooling path (10) through the housing (2), said cooling path running in meandering fashion between an inlet (5) and an outlet (6) and being able to be flowed through by a coolant,
**characterized in that**
- the housing (2) has, attached to the end sides on the cooling jacket (2a), housing closures (2b), in particular mounting plates, which comprise the redirecting grooves (4b),
- the housing (2) has a bypass duct (7) which fluidically connects the inlet (5) and the outlet (6) while bypassing the meandering cooling path (10),
- the bypass duct (7) is formed by a connecting groove (8) in an end-side joining face of the cooling jacket (2a) and/or of the housing closure (2b) or in a seal (11), arranged between the cooling jacket (2a) and the housing closure (2b), as a connection of two cutouts (12) which are formed in the seal (11) and which are associated with the cooling ducts (4a).

2. Electrical machine (1) according to Claim 1, **characterized in that** one of the housing closures (2b) has the inlet (5) and the outlet (6),
- wherein the inlet (5) is fluidically connected to an inlet groove (13) and the outlet is fluidically connected to an outlet groove (14) of the housing closure (2b),
- wherein the inlet groove (13) and the outlet groove (14) are each fluidically connected to an individual cooling duct (4a) of the cooling jacket (2a), and
- wherein the connecting groove (8) fluidically connects the inlet groove (13) and the outlet groove (14).

3. Electrical machine (1) according to Claim 2, **characterized in that** the redirecting grooves (4b), the connecting groove (8), the inlet groove (13) and the outlet groove (14) are arranged along the same circular path.

4. Electrical machine (1) according to Claim 2 or 3, **characterized in that** the radial extents of the inlet groove (13), the outlet groove (14) and the connecting groove (8) are identical.

5. Electrical machine (1) according to one of the preceding claims, **characterized in that** a ratio of height (h) to width (b) of the bypass duct (7) is between 1.0 and 4.0, preferably between 1.2 and 3.5.

6. Electrical machine (1) according to one of the preceding claims, **characterized in that** the bypass duct (7) starts upstream of the first cooling duct (4b) to be passed through by the coolant and ends downstream of the last cooling duct (4b) to be passed through by the coolant.

7. Electrical machine (1) according to one of the preceding claims, **characterized in that** the coolant is water or is water-based.

8. Electrical machine (1) according to one of the preceding claims, **characterized in that** a rotor (15) is mounted rotatably on the housing closures (4b), in particular via a rolling bearing (16) in each case.

## Revendications

1. Machine électrique (1) comportant un boîtier (2),
- le boîtier (2) comportant une chemise de refroidissement cylindrique creuse (2a) destinée à recevoir un stator (3), et
- l'enveloppe de refroidissement (2a) comportant des canaux de refroidissement (4a) s'étendant entre ses faces frontales (17),
- le boîtier (2) comportant des rainures de redirection (4b), de telle sorte que deux canaux de refroidissement (4a) adjacents sont reliés fluidiquement par une rainure de redirection (4b), les canaux de refroidissement (4a) et les rainures de redirection (4b) formant ainsi à travers le boîtier (2) un trajet de refroidissement (10) sinueux continu s'étendant entre une entrée (5) et une sortie (6), à travers lequel un liquide de refroidissement peut circuler,
**caractérisée en ce que**
- le boîtier (2) comporte des terminaisons (2b) de boîtier, en particulier des flasques, installées côté frontal sur la chemise de refroidissement (2a), qui comprennent les rainures de redirection (4b),
- le boîtier (2) comporte un canal de dérivation (7), qui relie fluidiquement l'entrée (5) et la sortie (6) en contournant le chemin de refroidissement (10) sinueux,
- le canal de dérivation (7) est réalisé par une rainure de raccordement (8) dans une surface d'assemblage côté frontal de l'enveloppe de refroidissement (2a) et/ou de la terminaison (2b) de boîtier ou dans un joint d'étanchéité (11) disposé entre la chemise de refroidissement (2a) et la terminaison (2b) de boîtier en tant que raccordement de deux découpes (12) formées dans le joint d'étanchéité (11) et associées aux canaux de refroidissement (4a).

2. Machine électrique (1) selon la revendication 1, **caractérisée en ce que** l'une des terminaisons (2b) de boîtier comporte l'entrée (5) et la sortie (6),
- l'entrée (5) étant reliée fluidiquement à une rainure d'entrée (13) et la sortie étant reliée fluidiquement à une rainure de sortie (14) de la terminaison (2b) de boîtier,
- la rainure d'entrée (13) et la rainure de sortie (14) étant reliées fluidiquement à respectivement un canal de refroidissement individuel (4a) de la chemise de refroidissement (2a), et
- la rainure de raccordement (8) reliant fluidiquement la rainure d'entrée (13) et la rainure de sortie (14).

3. Machine électrique (1) selon la revendication 2, **caractérisée en ce que** les rainures de redirection (4b), la rainure de raccordement (8), la rainure d'entrée (13) et la rainure de sortie (14) sont disposées le long de la même trajectoire circulaire.

4. Machine électrique (1) selon la revendication 2 ou 3, **caractérisée en ce que** l'extension radiale de la rainure d'entrée (13), de la rainure de sortie (14) et de la rainure de raccordement (8) est identique.

5. Machine électrique (1) selon l'une des revendications précédentes, **caractérisée en ce qu'**un rapport de la hauteur (h) à la largeur (b) du canal de dérivation (7) est compris entre 1,0 et 4,0, de manière préférée entre 1,2 et 3,5.

6. Machine électrique (1) selon l'une des revendications précédentes, **caractérisée en ce que** le canal de dérivation (7) commence en amont du premier canal de refroidissement (4b) devant être traversé par le fluide de refroidissement et se termine en aval du dernier canal de refroidissement (4b) devant être traversé par le fluide de refroidissement.

7. Machine électrique (1) selon l'une des revendications précédentes, **caractérisée en ce que** le fluide de refroidissement est de l'eau ou est à base d'eau.

8. Machine électrique (1) selon l'une des revendications précédentes, **caractérisée en ce qu'**un rotor (15) est monté de manière à pouvoir tourner sur les terminaisons (4b) de boîtier, en particulier par respectivement un palier à roulement (16).
